# EUROPEAN PATENT APPLICATION

(11) **EP 4 818 802 A1**
(43) Date of publication of application: **07.10.2026**
(21) Application number: 26165978.3
(22) Date of filing: 19.03.2026
(51) Int. Cl.: G03B 21/16, G03B 21/20

(54) **LIGHT SOURCE SYSTEM, PROJECTION DEVICE, AND ADJUSTMENT METHOD OF POSITION OF LIGHT EMITTING UNIT**

(30) Priority: 02.04.2025 US 202563782008 P; 13.06.2025 CN 202510789571
(71) Applicant: Coretronic Corporation, Hsin-Chu 300 (TW)
(72) Inventor: CHEN, Sung-Lien, 300 Hsin-Chu (TW); CHIU, Sheng-Yu, 300 Hsin-Chu (TW)
(74) Representative: Ter Meer und Partner mbB

(57) **Abstract**

A light source system, adapted to be disposed on a light combining base, includes a light source module and a positioning module. The light source module is configured to provide a color beam and includes a light emitting unit and a heat dissipating module. The light emitting unit is fixed onto the heat dissipating module. The heat dissipating module has a first locking hole extending along a first extension direction. The positioning module includes a frame and a first positioning assembly. The first positioning assembly corresponds to the first locking hole. The frame is fixed onto the light combining base and is located between the light combining base and the light source module. A projection device and an adjustment method of a position of the light emitting unit are also provided.

## Description

This application claims the priority benefit of U.S. provisional application serial no. 63/782,008, filed on April 2, 2025, and China application serial no. 202510789571.6, filed on June 13, 2025.

### Technical Field

The disclosure relates to a light source system, a projection device, and an adjustment method of a position of a light emitting unit.

### Description of Related Art

Conventional projectors that adopt blue lasers in conjunction with phosphor wheels cannot achieve the DCI-P3 color gamut for the projected images. By adding a red laser to the projector structure, the projected image can reach the DCI-P3 color gamut. However, when the number of light sources increases, the accuracy of the setting positions of the light sources affect the uniformity of the projected image, so the requirements for the accuracy of the setting positions of the light sources of the projector increase accordingly.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

Thus, it is an object of the present invention to provide a light source system and an adjustment method therefore to improve the accuracy of the setting positions of the light sources of the projector.

The object is solved by the features of the independent claims. Preferred embodiments are given in the dependent claims.

An embodiment of the disclosure provides a light source system, which is adapted to be configured on a light combining base and includes a light source module and a positioning module. The light source module is configured to provide at least one color beam. The light source module includes a light emitting unit and a heat dissipating module. The light emitting unit is fixed onto the heat dissipating module. The heat dissipating module has a first locking hole extending along a first extension direction. The positioning module includes a frame and a first positioning assembly. The first positioning assembly corresponds to the first locking hole. The frame is fixed onto the light combining base and is located between the light combining base and the light source module. The first positioning assembly includes a first positioning element and a first limiting member. The first limiting member is adapted to be fixed onto the frame to limit a part of the first positioning element between the first limiting member and the frame. The first positioning element is disposed through the frame along the first extension direction and is screwed into the first locking hole of the heat dissipating module. The part of the first positioning element is adapted to have different distances relative to the heat dissipating module, so that the light emitting unit has different positions relative to the light combining base in the first extension direction.

In one or more embodiments, the heat dissipating module may further has a second locking hole extending along a second extension direction.

In one or more embodiments, the positioning module may further comprise a second positioning assembly.

In one or more embodiments, the second positioning assembly may correspond to the second locking hole

In one or more embodiments, the second positioning assembly may comprise a second positioning element and a second limiting member.

In one or more embodiments, the second limiting member may be adapted to be fixed onto the frame to limit a part of the second positioning element between the second limiting member and the frame.

In one or more embodiments, the second positioning element may be disposed through the frame along the second extension direction and is screwed into the second locking hole of the heat dissipating module.

In one or more embodiments, the part of the second positioning element may be adapted to have different distances relative to the heat dissipating module, so that the light emitting unit has different positions relative to the light combining base in the second extension direction

In one or more embodiments, the first extension direction may be perpendicular to the second extension direction.

In one or more embodiments, the frame may comprise a first side wall and a second side wall perpendicular to each other.

In one or more embodiments, the first side wall may have a first through hole, and the second side wall has a second through hole.

In one or more embodiments, the first limiting member and the second limiting member may be respectively fixed onto the first side wall and the second side wall.

In one or more embodiments, the first positioning element may be adapted to be disposed through the first through hole in the first extension direction and screwed into the first locking hole.

In one or more embodiments, the second positioning element may be adapted to be disposed through the second through hole in the second extension direction and screwed into the second locking hole.

In one or more embodiments, the first limiting member may have a first limiting through hole.

In one or more embodiments, the second limiting member may have a second limiting through hole.

In one or more embodiments, the first positioning element may comprise a first head and a first screw rod connected to each other

In one or more embodiments, the second positioning element may comprise a second head and a second screw rod connected to each other.

In one or more embodiments, when the first screw rod of the first positioning element is screwed into the first locking hole, the first head may be adapted to be rotatably limited between the first limiting member and the first side wall, and the first limiting through hole of the first limiting member may expose a part of the first head.

In one or more embodiments, when the second screw rod of the second positioning element is screwed into the second locking hole, the second head may be adapted to be rotatably limited between the second limiting member and the second side wall, and the second limiting through hole of the second limiting member may expose a part of the second head.

In one or more embodiments, the heat dissipating module may have a plurality of limiting holes.

In one or more embodiments, the light source module may further comprise a plurality of locking assemblies.

In one or more embodiments, the plurality of locking assemblies may be configured to respectively pass through the plurality of limiting holes to lock the light source module onto the frame.

In one or more embodiments, each of the plurality of locking assemblies may comprise a protective member, an elastic member, and a fixing member.

In one or more embodiments, the fixing member may pass through a corresponding limiting hole to be locked with the frame.

In one or more embodiments, the fixing member may be disposed through the elastic member and the protective member.

In one or more embodiments, the protective member may be disposed on a side of the corresponding limiting hole away from the frame.

In one or more embodiments, the elastic member may be disposed on a side of the protective member away from the frame.

In one or more embodiments, each of the plurality of limiting holes may have an inner diameter, a diameter of the fixing member may be less than the inner diameter of the corresponding limiting hole

In one or more embodiments, an outer diameter of the protective member may be greater than the inner diameter of the corresponding limiting hole.

In one or more embodiments, the protective member may have a through hole, and a diameter of the through hole may be greater than the diameter of the fixing member.

In one or more embodiments, the frame may have a light inlet, wherein the light inlet is adapted to allow the at least one color beam to pass through.

In one or more embodiments, a material of the frame may be plastic or metal.

An embodiment of the disclosure provides a projection device, which includes a light source system as mentioned above, a light combining base, a light transmission module, an optical-mechanical module, and a lens module. The light source system is disposed on the light combining base. The light transmission module is disposed in the light combining base. The light source system is configured to provide at least one color beam. The light transmission module is disposed in a transmission path of the at least one color beam. The light transmission module is configured to transmit the at least one color beam to form an illumination beam. The optical-mechanical module is disposed in a transmission path of the illumination beam. The optical-mechanical module is configured to convert the illumination beam into an image beam. The lens module is disposed in a transmission path of the image beam and is configured to project the image beam out of the projection device. The light source system includes a light source module and a positioning module.

An embodiment of the disclosure provides an adjustment method of a position of a light emitting unit, which includes the following steps. The light emitting unit is fixed onto a heat dissipating module. A frame is fixed onto a light combining base. A first positioning element in a first positioning assembly is disposed through the frame along a first extension direction and is screwed into a first locking hole of the heat dissipating module, and a first limiting member in the first positioning assembly is fixed onto the frame, so that a part of the first positioning element is limited between the first limiting member and the frame. The first positioning element is rotated to drive the heat dissipating module to move relative to the light combining base along the first extension direction to adjust the position of the light emitting unit relative to the light combining base.

In one or more embodiments, the frame may comprise a first side wall, and the first side wall may have a first through hole.

In one or more embodiments, the step of disposing the first positioning element in the first positioning assembly through the frame along the first extension direction to be screwed into the first locking hole may comprise disposing the first positioning element through the first through hole in the first extension direction to be screwed into the first locking hole; and fixing the first limiting member onto the first side wall.

In one or more embodiments, the first limiting member may have a first limiting through hole, and the first positioning element may comprise a first head and a first screw rod connected to each other, wherein the step of disposing the first positioning element through the first through hole in the first extension direction to be screwed into the first locking hole may comprise: screwing the first screw rod into the first locking hole, and rotatably limiting the first head between the first limiting member and the first side wall by using the first limiting member, wherein the first limiting through hole of the first limiting member exposes a part of the first head.

In one or more embodiments, the adjustment method of the position of the light emitting unit may further comprise following steps of: disposing a second positioning element in a second positioning assembly through the frame along a second extension direction to be screwed into a second locking hole of the heat dissipating module, and fixing the second limiting member in the second positioning assembly onto the frame, so that a part of the second positioning element is limited between the second limiting member and the frame; and rotating the second positioning element to drive the heat dissipating module to move relative to the light combining base along the second extension direction to adjust the position of the light emitting unit relative to the light combining base, wherein the first extension direction is perpendicular to the second extension direction.

In one or more embodiments, the frame may comprise a second side wall, and the second side wall has a second through hole, wherein the step of disposing the second positioning element in the second positioning assembly through the frame along the second extension direction to be screwed into the second locking hole may comprise: disposing the second positioning element through the second through hole in the second extension direction to be screwed into the second locking hole; and fixing the second limiting member onto the second side wall.

In one or more embodiments, the second limiting member may have a second limiting through hole, and the second positioning element may comprise a second head and a second screw rod connected to each other, wherein the step of disposing the second positioning element through the second through hole in the second extension direction to be screwed into the second locking hole may comprise: screwing the second screw rod into the second locking hole, and rotatably limiting the second head between the second limiting member and the second side wall by using the second limiting member, wherein the second limiting through hole of the second limiting member exposes a part of the second head.

In one or more embodiments, the heat dissipating module may have a plurality of limiting holes, and the light source module further comprises a plurality of locking assemblies, the adjustment method may further comprise: respectively passing the plurality of locking assemblies through the plurality of limiting holes to be locked onto the frame.

In one or more embodiments, the adjustment method of the position of the light emitting unit, may further comprise the step: after adjusting the position of the light emitting unit relative to the light combining base, fixing a position of the heat dissipating module.

In one or more embodiments, the step of fixing the position of the heat dissipating module may comprise at least one of performing adhesive dispensing on the heat dissipating module and the frame, locking the heat dissipating module by using a locking member, or fixing the heat dissipating module by using a pressing plate.

Other objectives, features and advantages of the disclosure will be further understood from the further technological features disclosed by the embodiments of the disclosure wherein there are shown and described preferred embodiments of this invention, easily by way of illustration of modes best suited to carry out the invention.

### BRIEF DESCRIPTION OF THE DRAWINGS

FIG. 1 is a block diagram of a projection device according to an embodiment of the disclosure.
FIG. 2 is a three-dimensional schematic diagram of a part of a projection device according to an embodiment of the disclosure.
FIG. 3 is an exploded diagram of FIG. 2.
FIG. 4 is an enlarged schematic diagram of a frame in FIG. 3.
FIG. 5A is an enlarged schematic diagram of a light source module in FIG. 3.
FIG. 5B is a cross-sectional schematic diagram of a locking assembly in FIG. 2.
FIG. 5C is a three-dimensional schematic diagram of an elastic member of the locking assembly in FIG. 5A.
FIG. 5D is a schematic diagram of FIG. 5A from another viewing angle.
FIG. 6 is a flow chart of an adjustment method of a position of a light emitting unit according to an embodiment of the disclosure.
FIG. 7A is a detailed flow chart of step S300 in FIG. 6.
FIG. 7B is a detailed flow chart of step S310 in FIG. 7A.
FIG. 8A is a detailed flow chart of step S400 in FIG. 6.
FIG. 8B is a detailed flow chart of step S410 in FIG. 8A.
FIG. 9 is a detailed flow chart of step S800 in FIG. 6.
FIG. 10 is a schematic diagram of a light source system according to an embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top", "bottom", "front", "back", etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings. Similarly, the terms "facing", "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

The disclosure provides a light source system, a projection device, and an adjustment method of a position of a light emitting unit, which may easily adjust the position of the light emitting unit.

Other purposes and advantages of the disclosure may be further understood from the technical features of the disclosure.

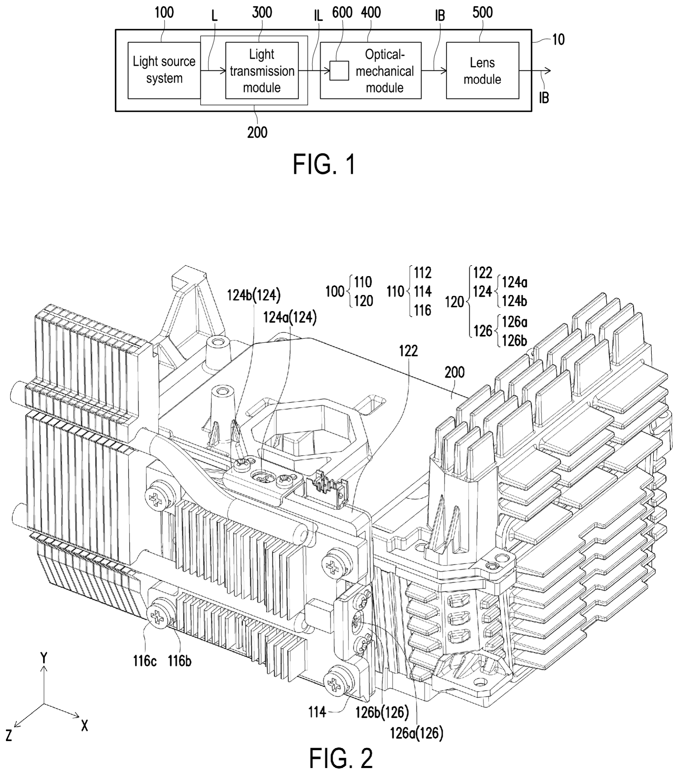

FIG. 1 is a block diagram of a projection device according to an embodiment of the disclosure. Please refer to FIG. 1. An embodiment of the disclosure provides a projection device 10, which includes a light source system 100, a light combining base 200, a light transmission module 300, an optical-mechanical module 400, and a lens module 500. The light source system 100 is disposed on the light combining base 200. The light transmission module 300 is disposed in the light combining base 200. The light source system 100 is configured to provide at least one color beam L. The light transmission module 300 is disposed in a transmission path of the at least one color beam L and is configured to transmit the at least one color beam L to form an illumination beam IL. The optical-mechanical module 400 is disposed in a transmission path of the illumination beam IL and is configured to convert the illumination beam IL into an image beam IB. The lens module 500 is disposed in a transmission path of the image beam IB and is configured to project the image beam IB out of the projection device 10.

For details, please refer to FIG. 1 and FIG. 2 together. FIG. 2 is a three-dimensional schematic diagram of a part of a projection device according to an embodiment of the disclosure. In the embodiment, the light combining base 200 has a light entrance 210 and an accommodation space, and the accommodation space of the light combining base 200 is communicated with the outside through the light entrance 210. The light source system 100 is disposed on the light combining base 200 and covers the light entrance 210, so that the at least one color beam L provided by the light source system 100 may pass through the light entrance 210 and enter the light combining base 200. The light transmission module 300 is disposed in the accommodation space of the light combining base 200 and may include multiple light transmission elements. The light transmission element is, for example, a lens, a light splitting mirror, a reflective mirror, etc. The disclosure does not limit the number and the type of the light transmission element. In an embodiment, the light entrance 210 of the light combining base 200 may be further provided with an optical assembly 212 (for example, a lens or a diffusion sheet covering the light entrance 210 of the light combining base 200). In an embodiment, a dustproof member may be disposed between the light source system 100 (for example, a frame 122) and the light combining base 200. The dustproof member surrounds the light entrance 210 of the light combining base 200 and exposes the light entrance 210 and the optical assembly 212 of the light combining base 200. By providing the dustproof member, the dustproof effect of the light source system 100 and the light combining base 200 may be enhanced.

In other embodiments, the light transmission module 300 may further include a phosphor wheel. The phosphor wheel is configured to convert the color beam L or other color beams of the light source system 100 into color beams with different wavelengths. The light transmission element is configured to transmit the color beam L, other color beams, and converted beams with different wavelengths. The light transmission module 300 may further include a light filter. The light filter is configured to be disposed in a transmission path of the color beam L, other color beams, and the converted beams. Therefore, the color beam L, other color beams, and the converted beams may form the illumination beam IL after passing through the light filter. In addition, the light transmission module 300 may further include a light diffusion element. The light diffusion element is adapted to be disposed in the transmission path of the color beam L, other color beams, or the converted beams.

In the embodiment, the optical-mechanical module 400 may include a light homogenizing element 600 and at least one light valve. The light homogenizing element 600 is disposed in the transmission path of the illumination beam IL. The light homogenizing element 600 is, for example, an integration rod, a lens array, or other optical elements with light homogenizing effect, but the disclosure is not limited thereto. The light valve is disposed in the transmission path of the illumination beam IL and is configured to convert the illumination beam IL into the image beam IB. The light valve is, for example, a reflective light modulator such as a digital micro-mirror device (DMD) or a liquid-crystal-on-silicon panel (LCOS). In other embodiments, the light valve may also be a transparent liquid crystal panel, an electro-optical modulator, a magneto-optical modulator, an acousto-optical modulator (AOM), or other types of spatial light modulators (SLM). The disclosure does not limit the form and the type of the light valve.

In the embodiment, the lens module 500 includes, for example, a combination of one or more optical lenses with refractive power, such as various combinations of non-planar lenses such as biconcave lenses, biconvex lenses, concave-convex lenses, convex-concave lenses, plano-convex lenses, and plano-concave lenses. The disclosure does not limit the form and the type of the lens module 500.

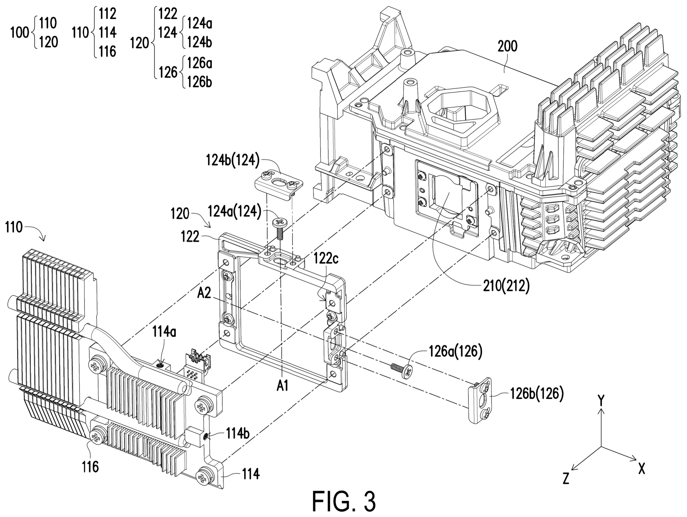

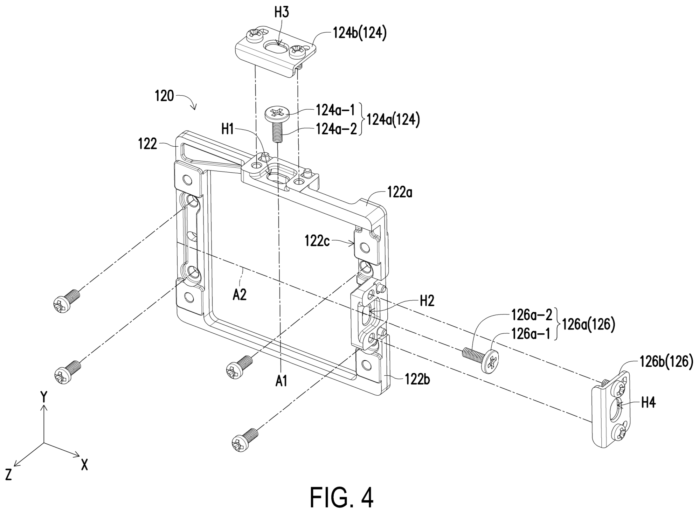

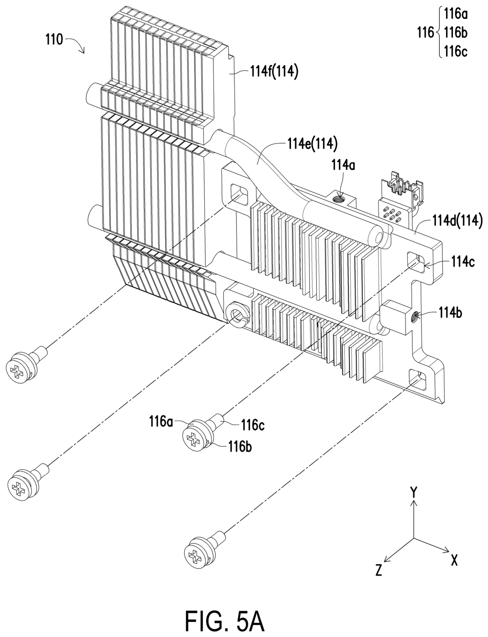

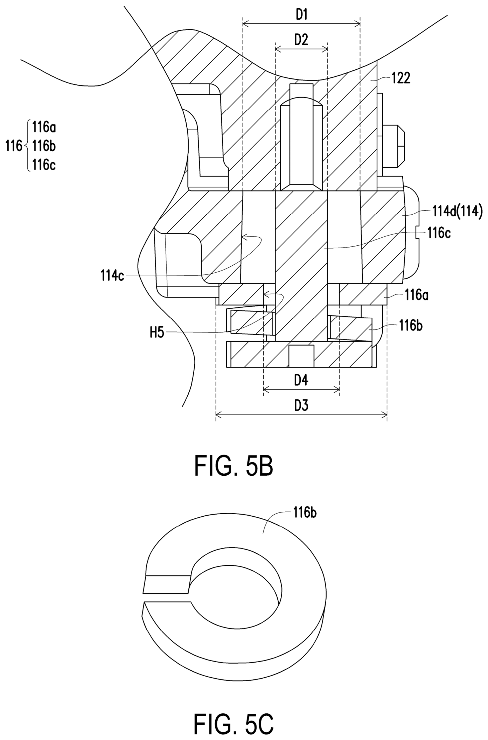

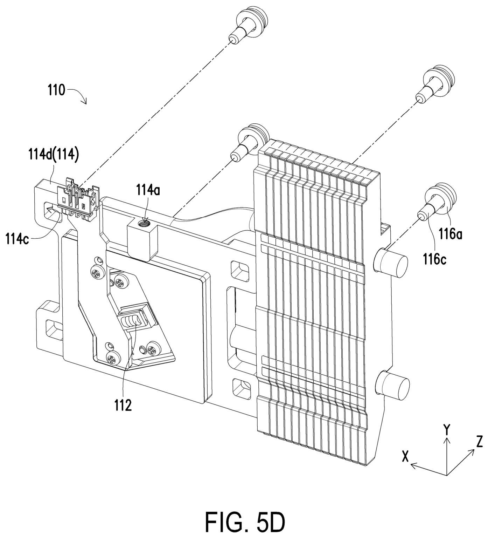

FIG. 3 is an exploded diagram of FIG. 2. FIG. 4 is an enlarged schematic diagram of a frame in FIG. 3. FIG. 5A is an enlarged schematic diagram of a light source module in FIG. 3. FIG. 5B is a cross-sectional schematic diagram of a locking assembly in FIG. 2. FIG. 5C is a three-dimensional schematic diagram of an elastic member of the locking assembly in FIG. 5A. FIG. 5D is a schematic diagram of FIG. 5A from another viewing angle.

Please refer to FIG. 2 to FIG. 5D. In the embodiment, the light source system 100 includes a light source module 110 and a positioning module 120. The light source module 110 is configured to provide the at least one color beam L. The color beam L may be a red beam, a green beam, a blue beam, a mixed beam, a beam of other colors, or a non-primary color beam. The disclosure does not limit the number and the color of the color beam L.

In the embodiment, the light source module 110 includes a light emitting unit 112 and a heat dissipating module 114, as shown in FIG. 5D. The light emitting unit 112 is fixed onto the heat dissipating module 114 and is configured to emit the at least one color beam L. The light emitting unit 112 may include, for example, one or more light emitting diodes (LEDs), one or more laser diodes (LDs), or a combination of the two types of light sources.

In the embodiment, the heat dissipating module 114 has a first locking hole 114a extending along a first extension direction A1 (for example, a direction parallel to the Y-axis in FIG. 3). The positioning module 120 includes the frame 122 and a first positioning assembly 124. The material of the frame 122 may be plastic or metal. When the material of the frame 122 is plastic, a heat insulation function may be further provided to insulate the light source module 110 from the light combining base 200, reduce heat conduction from the inside of the light combining base 200 to the light source module 110, and reduce the load of the heat dissipating module 114 in the light source module 110, but the disclosure is not limited thereto. The first positioning assembly 124 corresponds to the first locking hole 114a. The frame 122 is fixed onto the light combining base 200 and is located between the light combining base 200 and the light source module 110. The first positioning assembly 124 includes a first positioning element 124a and a first limiting member 124b. The first limiting member 124b is adapted to be fixed onto the frame 122 to limit a part of the first positioning element 124a between the first limiting member 124b and the frame 122. The first positioning element 124a is disposed through the frame 122 along the first extension direction A1 and is screwed into the first locking hole 114a of the heat dissipating module 114. The part of the first positioning element 124a is adapted to have different distances relative to the heat dissipating module 114, so that the light emitting unit 112 has different positions relative to the light combining base 200 in the first extension direction A1.

In the embodiment, the heat dissipating module 114 further has a second locking hole 114b extending along a second extension direction A2 (for example, a direction parallel to the X-axis in FIG. 3). The first extension direction A1 is perpendicular to the second extension direction A2. The positioning module 120 further includes a second positioning assembly 126. The second positioning assembly 126 corresponds to the second locking hole 114b. The second positioning assembly 126 includes a second positioning element 126a and a second limiting member 126b. The second limiting member 126b is adapted to be fixed onto the frame 122 to limit a part of the second positioning element 126a between the second limiting member 126b and the frame 122. The second positioning element 126a is disposed through the frame 122 along the second extension direction A2 and is screwed into the second locking hole 114b of the heat dissipating module 114. The part of the second positioning element 126a is adapted to have different distances relative to the heat dissipating module 114, so that the light emitting unit 122 has different positions relative to the light combining base 200 in the second extension direction A2.

In the embodiment, the frame 122 includes a first side wall 122a and a second side wall 122b perpendicular to each other, as shown in FIG. 4. The first side wall 122a has a first through hole H1, and the second side wall 122b has a second through hole H2. The first limiting member 124b and the second limiting member 126b are respectively fixed onto the first side wall 122a and the second side wall 122b. The first positioning element 124a is adapted to be disposed through the first through hole H1 in the first extension direction A1 and screwed into the first locking hole 114a. The second positioning element 126a is adapted to be disposed through the second through hole H2 in the second extension direction A2 and screwed into the second locking hole 114b.

In the embodiment, the first limiting member 124b has a first limiting through hole H3, and the second limiting member 126b has a second limiting through hole H4. The first positioning element 124a includes a first head 124a-1 and a first screw rod 124a-2 connected to each other. The second positioning element 126a includes a second head 126a-1 and a second screw rod 126a-2 connected to each other. The first positioning element 124a and the second positioning element 126a are, for example, screws, but the disclosure is not limited thereto. When the first screw rod 124a-2 of the first positioning element 124a is screwed into the first locking hole 114a, the first head 124a-1 is adapted to be rotatably limited between the first limiting member 124b and the first side wall 122a, and the first limiting through hole H3 of the first limiting member 124b exposes a part of the first head 124a-1. When the second screw rod 126a-2 of the second positioning element 126a is screwed into the second locking hole 114b, the second head 126a-1 is adapted to be rotatably limited between the second limiting member 126b and the second side wall 122b, and the second limiting through hole H4 of the second limiting member 126b exposes a part of the second head 126a-1.

Specifically, the first limiting through hole H3 of the first limiting member 124b only exposes a part (for example, the cross drive in FIG. 4) of the first head 124a-1 but not the entire first head 124a-1, so that the exposed part of the first head 124a-1 may be driven to rotate to simultaneously achieve the function of limiting the first positioning element 124a. Similarly, the second limiting through hole H4 of the second limiting member 126b only exposes a part (for example, the cross drive in FIG. 4) of the second head 126a-1 but not the entire second head 126a-1, so that the exposed part of the second head 126a-1 may be driven to rotate to simultaneously achieve the function of limiting the second positioning element 126a.

Since the first limiting member 124b is fixed onto the first side wall 122a, so that the first head 124a-1 of the first positioning element 124a is limited between the first limiting member 124b and the first side wall 122a, when the first positioning element 124a is rotated, the first positioning element 124a does not move along the first extension direction A1, but instead drives the heat dissipating module 114 screwed with the first positioning element 124a to move in the first extension direction A1 through the first screw rod 124a-2. Similarly, since the second limiting member 126b is fixed onto the second side wall 122b, so that the second head 126a-1 of the second positioning element 126a is limited between the second limiting member 126b and the second side wall 122b, when the second positioning element 126a is rotated, the second positioning element 126a does not move along the second extension direction A2, but instead drives the heat dissipating module 114 screwed with the second positioning element 126a to move in the second extension direction A2 through the second screw rod 126a-2.

In this way, the first head 124a-1 of the first positioning element 124a may be rotated through the first limiting through hole H3 of the first limiting member 124b, so as to change the distance of the first head 124a-1 of the first positioning element 124a relative to the heat dissipating module 114 to adjust the position of the light emitting unit 112 fixed onto the heat dissipating module 114 in the first extension direction A1. Similarly, the second head 126a-1 of the second positioning element 126a is rotated through the second limiting through hole H4 of the second limiting member 126b, so as to change the distance of the second head 126a-1 of the second positioning element 126a relative to the heat dissipating module 114 to adjust the position of the light emitting unit 112 fixed onto the heat dissipating module 114 in the second extension direction A2.

In the embodiment, as shown in FIG. 5A and FIG. 5D, the heat dissipating module 114 has multiple limiting holes 114c. The limiting holes 114c may be disposed at corners of a substrate 114d of the heat dissipating module 114 or at other suitable positions. In addition, the heat dissipating module 114 may further has at least one heat pipe 114e and/or a heat dissipating fin set 114f disposed on the substrate 114d and are/is configured to dissipate heat from the light emitting unit 112 of the light source module 110. Specifically, the at least one heat pipe 114e and/or heat dissipating fin set 114f are/is disposed on a surface of the substrate 114d, and the light emitting unit 112 is disposed on the other surface of the substrate 114d opposite to the surface. The light source module 110 further includes multiple locking assemblies 116. The multiple locking assemblies 116 are configured to respectively pass through the limiting holes 114b to lock the light source module 110 onto the frame 122. In an embodiment, a dustproof member may be disposed between the frame 122 and the light emitting unit 112, and the dustproof member surrounds the light emitting unit 112 and exposes the light emitting unit 112. By providing the dustproof member, the dustproof effect of the light source system 100 and the light combining base 200 may be enhanced.

In the embodiment, each of the multiple locking assemblies 116 includes a protective member 116a, an elastic member 116b, and a fixing member 116c. The elastic member 116b may be a C-shaped spring, as shown in FIG. 5C. The fixing member 116c passes through the corresponding limiting hole 114c and is locked with the frame 122. The fixing member 116c is disposed through the elastic member 116b and the protective member 116a. The protective member 116a is disposed on a side of the limiting hole 114c away from the frame 122. The elastic member 116b is disposed on a side of the protective member 116a away from the frame 122.

In the embodiment, each of the limiting holes 114c has an inner diameter D1. A diameter D2 of the fixing member 116c is less than the inner diameter D1 of the limiting hole 114c, and an outer diameter D3 of the protective member 116a is greater than the inner diameter D1 of the limiting hole 114c, as shown in FIG. 5B.

In the embodiment, the protective member 116a has a through hole H5. A diameter D4 of the through hole H5 is greater than the diameter D2 of the fixing member 116c. In other words, there are gaps between the fixing member 116c and the through hole H5, and between the fixing member 116c and the limiting hole 114c. The gap provides a movable space for the heat dissipating module 114 (and the light source module 110), so that (when the first positioning element 124a or the second positioning element 126a is rotated) the heat dissipating module 114 (and the light source module 110) may move relative to the frame 122 through the gap.

In the embodiment, the frame 122 has a light inlet 122c. The light inlet 122c is adapted to allow the at least one color beam L to pass through.

According to the above, the light emitting unit 112 fixed onto the substrate 114d is driven to move relative to the light combining base 200 by the first positioning assembly 124 and the second positioning assembly 126, so that the light emitting unit 112 and the light combining base 200 are not limited by their own structures, but can be quickly and accurately aligned, so that the color beam L from the light emitting unit 112 may accurately pass through the light entrance 210 of the light combining base 200. At the same time, since the positioning module 120 may be used to align the light source module 110 and the light combining base 200, the influence of the light source module 110 and the light combining base 200 on the illumination beam due to part tolerance may be greatly reduced, and the requirement for part tolerance may be reduced, thereby reducing the purchase cost of parts.

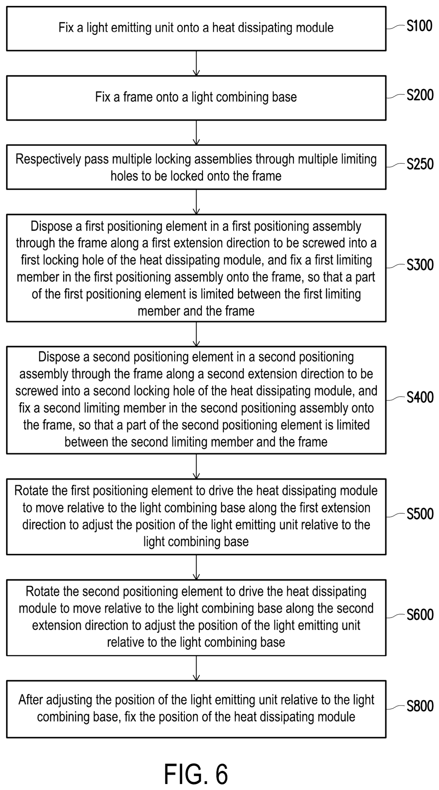

FIG. 6 is a flow chart of an adjustment method of a position of a light emitting unit according to an embodiment of the disclosure. Please refer to FIG. 6. An embodiment of the disclosure provides an adjustment method of the position of the light emitting unit 112, which includes the following steps. In step S100, the light emitting unit 112 is fixed onto the heat dissipating module 114. In step S200, the frame 122 is fixed onto the light combining base 200. In step S300, the first positioning element 124a in the first positioning assembly 124 is disposed through the frame 122 along the first extension direction A1 and is screwed into the first locking hole 114a of the heat dissipating module 114, and the first limiting member 124b in the first positioning assembly 124 is fixed onto the frame 122, so that a part of the first positioning element 124a is limited between the first limiting member 124b and the frame 122. In step S500, the first positioning element 124a is rotated to drive the heat dissipating module 114 to move relative to the light combining base 200 along the first extension direction A1 to adjust the position of the light emitting unit 112 relative to the light combining base 200.

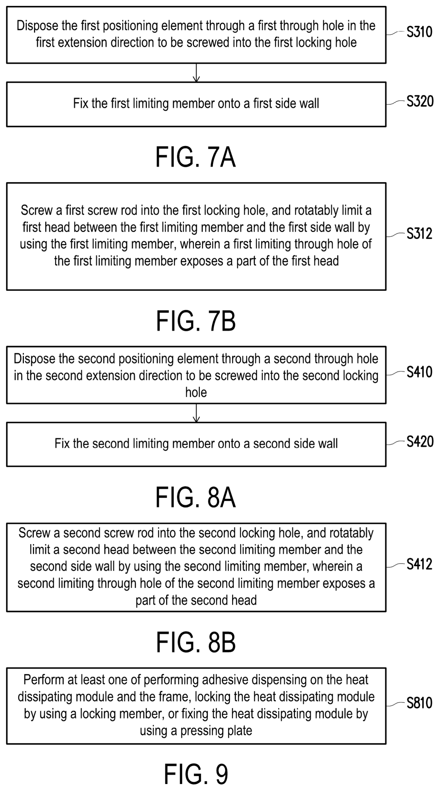

FIG. 7A is a detailed flow chart of step S300 in FIG. 6. Please refer to FIG. 7A. In the embodiment, step S300 includes the following steps. In step S310, the first positioning element 124a is disposed through the first through hole H1 in the first extension direction A1 and is screwed into the first locking hole 114a. In step S320, the first limiting member 124b is fixed onto the first side wall 122a.

FIG. 7B is a detailed flow chart of step S310 in FIG. 7A. Please refer to FIG. 7B. In the embodiment, step S310 includes the following steps. In step S312, the first screw rod 124a-2 is screwed into the first locking hole 114a, and the first head 124a-1 is rotatably limited between the first limiting member 124b and the first side wall 122a by using the first limiting member 124b, and the first limiting through hole H3 of the first limiting member 124b exposes a part of the first head 124a-1.

Please refer to FIG. 6 again. In the embodiment, the adjustment method of the position of the light emitting unit further includes the following steps. In step S400, the second positioning element 126a in the second positioning assembly 126 is disposed through the frame 122 along the second extension direction A2 and is screwed into the second locking hole 114b of the heat dissipating module 114, and the second limiting member 126b in the second positioning assembly 126 is fixed onto the frame 122, so that a part of the second positioning element 126a is limited between the second limiting member 126b and the frame 122. In step S600, the second positioning element 126a is rotated to drive the heat dissipating module 114 to move relative to the light combining base 200 along the second extension direction A2 to adjust the position of the light emitting unit 112 relative to the light combining base 200.

FIG. 8A is a detailed flow chart of step S400 in FIG. 6. Please refer to FIG. 8A. In the embodiment, step S400 includes the following steps. In step S410, the second positioning element 126a is disposed through the second through hole H2 in the second extension direction A2 and is screwed into the second locking hole 114b. In step S420, the second limiting member 126b is fixed onto the second side wall 122b.

FIG. 8B is a detailed flow chart of step S410 in FIG. 8A. Please refer to FIG. 8B. In the embodiment, step S410 includes the following steps. In step S412, the second screw rod 126a-2 is screwed into the second locking hole 114b, and the second head 126a-1 is rotatably limited between the second limiting member 126b and the second side wall 122b by using the second limiting member 126b, and the second limiting through hole H4 of the second limiting member 126b exposes a part of the second head 126a-1.

Please refer to FIG. 6 again. In the embodiment, the adjustment method of the position of the light emitting unit further includes the following steps. In step S250, the locking assemblies 116 are respectively passed through the limiting holes 114c to be locked onto the frame 122 to achieve a pre-fixing effect. In step S800, after adjusting the position of the light emitting unit 112 relative to the light combining base 200, the position of the heat dissipating module 114 (and the light source module 110) is fixed.

FIG. 9 is a detailed flow chart of step S800 in FIG. 6. Please refer to FIG. 9. In the embodiment, step S800 includes the following steps. In step S810, at least one of performing adhesive dispensing on the heat dissipating module 114 and the frame 122, locking the heat dissipating module 114 by using a locking member, or fixing the heat dissipating module 114 by using a pressing plate is performed (but the disclosure does not limit the method of fixing the heat dissipating module 114). Taking adhesive dispensing as an example, adhesive dispensing may be performed on the first positioning assembly 124, the second positioning assembly 126, and the locking assembly 116, so that the position of the heat dissipating module 114 (and the light source module 110) is fixed and cannot be moved.

However, in another embodiment, step S800 of fixing the heat dissipating module 114 may not be executed for the adjustment method of the position of the light emitting unit 112 to provide a user with freedom to adjust the position of the light emitting unit 112.

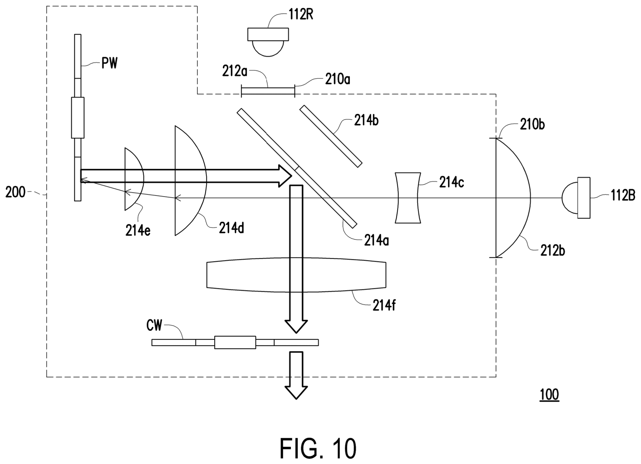

FIG. 10 is a schematic diagram of a light source system according to an embodiment of the disclosure. Please refer to FIG. 10. In the embodiment, the light source module 110 includes light emitting units 112R and 112B. Specifically, the light emitting unit 112R may be disposed on the substrate 114d as in any of the above embodiments and connected to the light combining base 200 through the frame 122. The light emitting unit 112B may be disposed on another substrate as in any of the above embodiments and connected to the light combining base 200 through another frame 122. In the embodiment, the light combining base 200 has light entrances 210a and 210b respectively corresponding to the light emitting units 112R and 112B. The light entrances 210a and 210b may further be provided with optical assemblies 212a and 212b, wherein the optical assembly 212a is a diffusion sheet, and the optical assembly 212b is a lens, but not limited thereto. The accommodation space of the light combining base 200 is provided with multiple light transmission elements 214a to 214f, wherein the light transmission elements 214a and 214b are light splitting mirrors, and the light transmission elements 214c to 214f are lenses, but not limited thereto. In addition, the accommodation space of the light combining base 200 is further provided with a phosphor wheel PW and a light filter CW. In the embodiment, the light source module 110 does not include optical elements such as light splitting/combining elements or reflective mirrors, so the light emitting units 112R and 112B may be respectively aligned and adjusted relative to the light combining base 200. In the embodiment, a red beam emitted by the light emitting unit 112R sequentially passes through the optical assembly 212a, the light transmission elements 214a and 214f, and the light filter CW to reach a light exit (not shown) of the light combining base 200, and enter a light entrance of the light homogenizing element 600 in the optical-mechanical module 400. A blue beam emitted by the light emitting unit 112B sequentially passes through the optical assembly 212b and the light transmission elements 214c, 214a, 214d, and 214e to reach the phosphor wheel PW. A part of the blue beam is converted into a yellow beam or a green beam and sequentially passes through the light transmission elements 214e, 214d, 214a, and 214f from the phosphor wheel PW to be filtered in the light filter CW. The yellow beam is filtered into a red beam, and the green beam is filtered into a green beam with a purer wavelength. The red beam or the green beam emitted via the light filter CW is transmitted to the light exit of the light combining base 200, and enter the light entrance of the light homogenizing element 600 in the optical-mechanical module 400. In addition, another part of the blue beam emitted by the light emitting unit 112B is reflected by the phosphor wheel PW and sequentially passes through the light transmission elements 214e, 214d, 214a, and 214f and the light filter CW from the phosphor wheel PW to reach the light exit of the light combining base 200, and enter the light entrance of the light homogenizing element 600 in the optical-mechanical module 400.

In summary, in the disclosure, the light emitting unit is fixed onto the heat dissipating module, the frame is fixed onto the light combining base, the first positioning element in the first positioning assembly is disposed through the frame along the first extension direction and is screwed into the first locking hole of the heat dissipating module, and the first limiting member in the first positioning assembly is fixed onto the frame, so that a part of the first positioning element is limited between the first limiting member and the frame. Therefore, when the first positioning element is rotated, the heat dissipating module may be driven to move relative to the light combining base along the first extension direction to adjust the position of the light emitting unit relative to the light combining base, so that the position of the light emitting unit may be adjusted to the correct position in the light path design. Therefore, the light source system, the projection device, and the adjustment method of the position of the light emitting unit of the disclosure can provide improved illumination effect or projection effect. Furthermore, in the embodiments of the disclosure, the frame is added between the conventional light combining base and heat dissipating module, and the position of the light emitting unit may be adjusted by the first positioning element, which may not only reduce the processing difficulty, but also reduce the production cost.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The use of "at least one of...and..." thereof herein may include "one or more of the items contained in the list". For example, the use of "at least one of A and B" thereof herein may include only A, or only B, or A and B. Similarly, the use of "at least one of A, B, and C" thereof herein may include only A, or only B, or only C, or any combination of A, B, and C. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

## Claims

1. A light source system (100), adapted to be disposed on a light combining base (200), the light source system (100) comprising a light source module (110) and a positioning module (120), wherein:
the light source module (110) is configured to provide at least one color beam (L), and the light source module (110) comprises a light emitting unit (112) and a heat dissipating module (114), wherein the light emitting unit (112) is fixed onto the heat dissipating module (114), and the heat dissipating module (114) has a first locking hole (114a) extending along a first extension direction (A1); and
the positioning module (120) comprises a frame (122) and a first positioning assembly (124), wherein the first positioning assembly (124) corresponds to the first locking hole (114a), the frame (122) is fixed onto the light combining base (200) and is located between the light combining base (200) and the light source module (110), the first positioning assembly (124) comprises a first positioning element (124a) and a first limiting member (124b), the first limiting member (124b) is adapted to be fixed onto the frame (122) to limit a part of the first positioning element (124a) between the first limiting member (124b) and the frame (122), the first positioning element (124a) is disposed through the frame (122) along the first extension direction (A1) and is screwed into the first locking hole (114a) of the heat dissipating module (114), and the part of the first positioning element (124a) is adapted to have different distances relative to the heat dissipating module (114), so that the light emitting unit (112) has different positions relative to the light combining base (200) in the first extension direction (A1).

2. The light source system according to claim 1, wherein the heat dissipating module (114) further has a second locking hole (114b) extending along a second extension direction (A2), the positioning module (120) further comprises a second positioning assembly (126), the second positioning assembly (126) corresponds to the second locking hole (114b), the second positioning assembly (126) comprises a second positioning element (126a) and a second limiting member (126b), the second limiting member (126b) is adapted to be fixed onto the frame (122) to limit a part of the second positioning element (126a) between the second limiting member (126b) and the frame (122), the second positioning element (126a) is disposed through the frame (122) along the second extension direction (A2) and is screwed into the second locking hole (114b) of the heat dissipating module (114), the part of the second positioning element (126a) is adapted to have different distances relative to the heat dissipating module (114), so that the light emitting unit (112) has different positions relative to the light combining base (200) in the second extension direction (A2), and the first extension direction (A1) is perpendicular to the second extension direction (A2).

3. The light source system according to claim 2, wherein the frame (122) comprises a first side wall (122a) and a second side wall (122b) perpendicular to each other, wherein:
the first side wall (122a) has a first through hole (H1), and the second side wall (122b) has a second through hole (H2); and
the first limiting member (124b) and the second limiting member (126b) are respectively fixed onto the first side wall (122a) and the second side wall (122b), wherein the first positioning element (124a) is adapted to be disposed through the first through hole (H1) in the first extension direction (A1) and screwed into the first locking hole (114a), and the second positioning element (126a) is adapted to be disposed through the second through hole (H2) in the second extension direction (A2) and screwed into the second locking hole (114b).

4. The light source system according to claim 3, wherein the first limiting member (124b) has a first limiting through hole (H3), the second limiting member (126b) has a second limiting through hole (H4), the first positioning element (124a) comprises a first head (124a-1) and a first screw rod (124a-2) connected to each other, and the second positioning element (126a) comprises a second head (126a-1) and a second screw rod (126a-2) connected to each other, wherein:
when the first screw rod (124a-2) of the first positioning element (124a) is screwed into the first locking hole (114a), the first head (124a-1) is adapted to be rotatably limited between the first limiting member (124b) and the first side wall (122a), and the first limiting through hole (H3) of the first limiting member (124b) exposes a part of the first head (124a-1); and
when the second screw rod (126a-2) of the second positioning element (126a) is screwed into the second locking hole (114b), the second head (126a-1) is adapted to be rotatably limited between the second limiting member (126b) and the second side wall (122b), and the second limiting through hole (H4) of the second limiting member (126b) exposes a part of the second head (126a-1).

5. The light source system according to any one of the preceding claims, wherein the heat dissipating module (114) has a plurality of limiting holes (114c), and the light source module (110) further comprises a plurality of locking assemblies (116), the plurality of locking assemblies (116) are configured to respectively pass through the plurality of limiting holes (114c) to lock the light source module (110) onto the frame (122),
preferably each of the plurality of locking assemblies (116) comprises a protective member (116a), an elastic member (116b), and a fixing member (116c), the fixing member (116c) passes through a corresponding limiting hole (114c) to be locked with the frame (122), the fixing member (116c) is disposed through the elastic member (116b) and the protective member (116a), the protective member (116a) is disposed on a side of the corresponding limiting hole (114c) away from the frame (122), and the elastic member (116b) is disposed on a side of the protective member (116a) away from the frame (122).

6. The light source system according to claim 5, wherein each of the plurality of limiting holes (114c) has an inner diameter (D1), a diameter (D2) of the fixing member (116c) to is less than the inner diameter (D1) of the corresponding limiting hole (114c), and an outer diameter (D3) of the protective member (116a) is greater than the inner diameter (D1) of the corresponding limiting hole (114c) and/or the protective member (116a) has a through hole (H5), and a diameter (D4) of the through hole (H5) is greater than the diameter (D2) of the fixing member (116c).

7. The light source system according to any one of the preceding claims, wherein the frame (122) has a light inlet (122c), wherein the light inlet (122c) is adapted to allow the at least one color beam (L) to pass through and/or a material of the frame (122) is plastic or metal.

8. A projection device (10), comprising a light source system (100) as claimed in any one of the preceding claims, further comprising a light combining base (200), a light transmission module (300), an optical-mechanical module (400), and a lens module (500),
the light source system (100) is disposed on the light combining base (200), the light transmission module is disposed in the light combining base (200), the light source system (100) is configured to provide at least one color beam (L), the light transmission module (300) is disposed in a transmission path of the at least one color beam (L), the light transmission module (300) is configured to transmit the at least one color beam (L) to form an illumination beam (IL), the optical-mechanical module (400) is disposed in a transmission path of the illumination beam (IL), the optical-mechanical module (400) is configured to convert the illumination beam (IL) into an image beam (IB), the lens module (500) is disposed in a transmission path of the image beam (IB) and is configured to project the image beam (IB) out of the projection device (10).

9. An adjustment method of a position of a light emitting unit (112), comprising the steps of:
fixing the light emitting unit (112) onto a heat dissipating module (114);
fixing a frame (122) onto a light combining base (200);
disposing a first positioning element (124a) in a first positioning assembly (124) through the frame (122) along a first extension direction (A1) to be screwed into a first locking hole (114a) of the heat dissipating module (114), and fixing a first limiting member (124b) in the first positioning assembly (124) onto the frame (122), so that a part of the first positioning element (124a) is limited between the first limiting member (124b) and the frame (122); and
rotating the first positioning element (124a) to drive the heat dissipating module (114) to move relative to the light combining base (200) along the first extension direction (A1) to adjust the position of the light emitting unit (112) relative to the light combining base (200),
preferably the frame (122) comprises a first side wall (122a), and the first side wall (122a) has a first through hole, wherein the step of disposing the first positioning element (124a) in the first positioning assembly (124) through the frame (122) along the first extension direction (A1) to be screwed into the first locking hole (114a) comprises:
disposing the first positioning element (124a) through the first through hole (H1) in the first extension direction (A1) to be screwed into the first locking hole (114a); and
fixing the first limiting member (124b) onto the first side wall (122a).

10. The adjustment method of the position of the light emitting unit (112) according to claim 9, wherein the first limiting member (124b) has a first limiting through hole (H3), and the first positioning element (124a) comprises a first head (124a-1) and a first screw rod (124a-2) connected to each other, wherein the step of disposing the first positioning element (124a) through the first through hole (H1) in the first extension direction (A1) to be screwed into the first locking hole (114a) comprises:
screwing the first screw rod (124a-2) into the first locking hole (114a), and rotatably limiting the first head (124a-1) between the first limiting member (124b) and the first side wall (122a) by using the first limiting member (124b), wherein the first limiting through hole (H3) of the first limiting member (124b) exposes a part of the first head (124a-1).

11. The adjustment method of the position of the light emitting unit (112) according to claim 9 or 10, further comprising following steps of:
disposing a second positioning element (126a) in a second positioning assembly (126) through the frame (122) along a second extension direction (A2) to be screwed into a second locking hole (114b) of the heat dissipating module (114), and fixing the second limiting member (126b) in the second positioning assembly (126) onto the frame (122), so that a part of the second positioning element (126a) is limited between the second limiting member (126b) and the frame (122); and
rotating the second positioning element (126a) to drive the heat dissipating module (114) to move relative to the light combining base (200) along the second extension direction (A2) to adjust the position of the light emitting unit (112) relative to the light combining base (200), wherein the first extension direction (A1) is perpendicular to the second extension direction (A2),
preferably the frame (122) comprises a second side wall (122b), and the second side wall (122b) has a second through hole (H2), wherein the step of disposing the second positioning element (126a) in the second positioning assembly (126) through the frame (122) along the second extension direction (A2) to be screwed into the second locking hole (114b) comprises:
disposing the second positioning element (126a) through the second through hole (H2) in the second extension direction (A2) to be screwed into the second locking hole (114b); and
fixing the second limiting member (126b) onto the second side wall (122b).

12. The adjustment method of the position of the light emitting unit (112) according to claim 11, wherein the second limiting member (126b) has a second limiting through hole (H4), and the second positioning element (126a) comprises a second head (126a-1) and a second screw rod (126a-2) connected to each other, wherein the step of disposing the second positioning element (126a) through the second through hole (H2) in the second extension direction (A2) to be screwed into the second locking hole (114b) comprises:
screwing the second screw rod (126a-2) into the second locking hole (114b), and rotatably limiting the second head (126a-1) between the second limiting member (126b) and the second side wall (122b) by using the second limiting member (126b), wherein the second limiting through hole (H4) of the second limiting member (126b) exposes a part of the second head (126a-1).

13. The adjustment method of the position of the light emitting unit (112) according to any one of the claims 9-12, wherein the heat dissipating module (114) has a plurality of limiting holes (114c), and the light source module (110) further comprises a plurality of locking assemblies (116), the adjustment method further comprising:
respectively passing the plurality of locking assemblies (116) through the plurality of limiting holes (114c) to be locked onto the frame (122).

14. The adjustment method of the position of the light emitting unit (112) according to any one of the claims 9-13, further comprising:
after adjusting the position of the light emitting unit (112) relative to the light combining base (200), fixing a position of the heat dissipating module (114),
preferably the step of fixing the position of the heat dissipating module (114) comprises:
at least one of performing adhesive dispensing on the heat dissipating module (114) and the frame (122), locking the heat dissipating module (114) by using a locking member, or fixing the heat dissipating module (114) by using a pressing plate.
